# EUROPEAN PATENT SPECIFICATION

(11) **EP 2 894 824 B1**
(45) Date of publication and mention of the grant of the patent: **24.07.2019**
(21) Application number: 13841422.2
(22) Date of filing: 27.09.2013
(51) Int. Cl.: H04W 76/12, H04W 12/06, H04L 29/06

(54) **METHOD AND DEVICE FOR WIRELESS INFORMATION TRANSMISSION**
VERFAHREN UND VORRICHTUNG FÜR DRAHTLOSE INFORMATIONSÜBERTRAGUNG
PROCÉDÉ ET DISPOSITIF DE TRANSMISSION D'INFORMATIONS SANS FIL

(30) Priority: 27.09.2012 CN 201210369738
(43) Date of publication of application: 15.07.2015
(73) Proprietor: Huawei Technologies Co., Ltd., Longgang District Shenzhen, Guangdong 518129 (CN)
(72) Inventor: ZHANG, Peng, Shenzhen Guangdong 518129 (CN); JIN, Xiaoming, Shenzhen Guangdong 518129 (CN); LIU, Feng, Shenzhen Guangdong 518129 (CN); ZHANG, Xiaoxiao, Shenzhen Guangdong 518129 (CN)
(74) Representative: Körber, Martin Hans
(86) International application number: PCT/CN2013/084518
(87) International publication number: WO 2014/048373

(56) References cited:
- EP-A1- 1 715 625
- EP-A1- 1 850 531
- WO-A1-2008/069520
- CN-A- 101 335 666
- CN-A- 101 621 802
- CN-A- 101 771 612
- CN-B- 101 588 570
- KR-A- 20110 003 643
- US-A1- 2003 153 309
- US-A1- 2007 282 855

## Description

### TECHNICAL FIELD

Embodiments of the present invention relate to the communications field, and in particularly, to a method and a device for transmitting wireless information.

### BACKGROUND

With development of wireless local area network (Wireless Local Area Networks, referred to as WLAN for short), the prior art provides a solution of separating an access controller (Access Controller, referred to as AC for short) from a multi-service control gateway (Multi-service control gateway, referred to as MSCG for short) device. In this solution, the MSCG device manages access and authentication of a user, and the AC is specialized in managing an access point (Access Point, referred to as AP for short), thereby achieving network layering and professional specialization which can effectively reduce complexity of AC technology.

Patent EP1850531A1 discloses a method for interworking of standardised networks, in which user equipment first sends a Dynamic Service Addition (DSA) request for service flow addition to base station in the WiMAX network, wherein said DSA request may be for addition of non-3G PP service flow 12.1 and/or for addition of 3GPP service flow 13.1; upon reception of DSA request from user equipment, the base station sends out a further DSA request for service flow addition to Wimax Access Controller (WAC) in the WiMAX network; WAC then issues a Tunnel Initiation Request, preferably but not limited to a RFC 2868 Tunnel Initiation Request, to Tunnel Termination Gateway (TTG) situated in the 3GPP network; TTG then sends a Packet Data Protocol (PDP) context activation message to Gateway GPRS Support Node (GGSN); as a consequence of the above-described transmission of requests DSA, DSA', RFC 2868, and PDP, a number of service flow tunnels are established respectively within and between WiMAX network and 3GPP network, and service flow tunnels 12.1, 13.1 for non-3GPP service flow and 3GPP service flow, respectively, are established over a radio link between user equipment and base station; base station then relays said service flows to WAC via service flow tunnel 12.2 for non-3GPP service flow and service flow tunnel 13.2 dedicated for the 3GPP service flow and marked accordingly.

Patent US2007/282855A1 discloses a method of managing access records of user access to a secure data network, in which user may access a secure data network through access server, wherein the secure data network include an access record gateway and an access record datastore, the access server may provide user access information to access record gateway, and the access record gateway may record the user access information.

However, in an implementation process of embodiments of the present invention, the inventor found that, in the prior art, due to the separation of the AC and the MSCG device, the MSCG device is difficult to acquire wireless access information of a user, for example, access address information of a wireless network card and the like, so that an authentication server can not control online of the user.

### SUMMARY

Embodiments of the present invention provide a method and a device for transmitting wireless information, so as for enabling an access controller to transmit wireless access information of a user to a multi-service control gateway under a condition that the access controller is separate from the multi-service control gateway.

In a first aspect, a method for transmitting wireless information is provided. The method includes:
sending, by an access controller, a first control and provisioning of wireless access points CAPWAP tunnel establishment request to a multi-service control gateway, where the first CAPWAP tunnel establishment request is used for requesting to establish a first CAPWAP tunnel between the access controller and the multi-service control gateway, wherein the access controller is used for managing access points;
receiving, by the access controller, a first CAPWAP tunnel establishment response sent by the multi-service control gateway;
receiving, by the access controller, wireless access information of a user sent by an access point; and
receiving, by the access controller, an association request sent by the user for requesting use of a wireless network;
performing, by the access controller, association permission verification on the user; and
sending, by the access controller if the verification is passed, the wireless access information of the user to the multi-service control gateway through the first CAPWAP tunnel.

In a first possible implementation manner of the first aspect, the wireless access information of the user includes: media access control MAC address information of an access point with which the user needs to be associated, service set identifier SSID information with which the user needs to be associated and MAC address information of a wireless network card of the user.

According to the first aspect or the first possible implementation manner of the first aspect, in a second possible implementation manner of the first aspect, before the receiving, by the access controller, wireless access information of a user sent by an access point, the method further includes:
receiving, by the access controller, a second CAPWAP tunnel establishment request sent by the access point, where the second CAPWAP tunnel establishment request is used for requesting to establish a second CAPWAP tunnel between the access controller and the access point;
sending, by the access controller, a second CAPWAP tunnel establishment response to the access point; and
receiving, by the access controller, the wireless access information of the user sent by the access point through the second CAPWAP tunnel.

According to the first aspect or the first possible implementation manner of the first aspect or the second possible implementation manner of the first aspect, in a third possible implementation manner of the first aspect, before the sending, by the access controller, the wireless access information of the user to the multi-service control gateway through the first CAPWAP tunnel, the method further includes:
receiving, by the access controller, a association request sent by the user, where the association request is used for requesting to use a wireless network;
performing, by the access controller, association permission verification on the user, and if the verification is passed, determining, by the access controller, to send the wireless access information of the user to the multi-service control gateway through the first CAPWAP tunnel.

According to the first aspect or the first possible implementation manner of the first aspect or the second possible implementation manner of the first aspect, in a fourth possible implementation manner of the first aspect, before the sending, by the access controller, the wireless access information of the user to the multi-service control gateway through the first CAPWAP tunnel, the method further includes:
receiving, by the access controller, a association request sent by the user, where the association request is used for requesting to use a wireless network;
performing, by the access point, association permission verification on the user, and if the verification is passed, determining, by the access controller, to send the wireless access information of the user to the multi-service control gateway through the first CAPWAP tunnel.

According to the first aspect or the first possible implementation manner of the first aspect or the second possible implementation manner of the first aspect, in a fifth possible implementation manner of the first aspect, before the sending, by the access controller, the wireless access information of the user to the multi-service control gateway through the first CAPWAP tunnel, the method further includes:
receiving, by the access controller, a association request sent by the user, where the association request is used for requesting to use a wireless network;
performing, by the access controller and the access point, association permission verification on the user, and if the verification is passed, determining, by the access controller, to send the wireless access information of the user to the multi-service control gateway through the first CAPWAP tunnel.

According to the third or fourth or fifth possible implementation manner of the first aspect, in a sixth possible implementation manner of the first aspect, after the sending, by the access controller, the wireless access information of the user to the multi-service control gateway through the first CAPWAP tunnel, the method further includes:
receiving, by the access controller, a disassociation request sent by the user, where the disassociation request is used for requesting to disconnect the wireless network connection;
disconnecting, by the access controller, a connection between the wireless network and the user.

In a second aspect, a method for transmitting wireless information is provided. The method includes:
receiving, by a multi-service control gateway, a first control and provisioning of wireless access points CAPWAP tunnel establishment request sent by an access controller, where the first CAPWAP tunnel establishment request is used for requesting to establish a first CAPWAP tunnel between the access controller and the multi-service control gateway, wherein the access controller is used for managing access points;
sending, by the multi-service control gateway, a first CAPWAP tunnel establishment response to the access controller;
receiving, by the multi-service control gateway, wireless access information of a user sent by the access controller through the first CAPWAP tunnel;
receiving, by the multi-service control gateway, a first access authentication request sent by the user; and
after the first access authentication request is received, sending, by the multi-service control gateway, a second access authentication request carrying parameters necessary for authenticating the user to an Authentication Authorization Accounting AAA authentication server according to the wireless access information of the user, so as to enable the AAA authentication server to authenticate the user.

In a first possible implementation manner of the second aspect, the wireless access information of the user includes: media access control MAC address information of an access point with which the user needs to be associated, service set identifier SSID information with which the user needs to be associated and MAC address information of a wireless network card of the user; and the parameters necessary for authenticating the user include: the MAC address information of the access point with which the user needs to be associated and the SSID information with which the user needs to be associated.

According to the first possible implementation manner of the second aspect, in a second possible implementation manner of the second aspect, after the receiving, by the multi-service control gateway, wireless access information of the user sent by the access controller through the first CAPWAP tunnel, the method further includes:
storing, by the multi-service control gateway, the wireless access information of the user.

According to the second possible implementation manner of the second aspect, in a third possible implementation manner of the second aspect, the after the first access authentication request is received, sending, by the multi-service control gateway, a second access authentication request to an Authentication Authorization Accounting AAA authentication server according to the wireless access information of the user, includes:
determining, by the multi-service control gateway, the wireless access information of the user stored in the multi-service control gateway according to an MAC address of the user carried in the first access authentication request; and
encapsulating, by the multi-service control gateway, the MAC address information of the access point with which the user needs to be associated and the SSID information with which the user needs to be associated, which are included in the wireless access information of the user, into the second access authentication request, and sending the second access authentication request to the AAA authentication server.

According to the second possible implementation manner of the second aspect or the third possible implementation manner of the second aspect, in a fourth possible implementation manner of the second aspect, after the after the first access authentication request is received, sending, by the multi-service control gateway, a second access authentication request to an Authentication Authorization Accounting AAA authentication server according to the wireless access information of the user, the method further includes:
receiving, by the multi-service control gateway, a request of deleting the wireless access information of the user sent by the access controller through the first CAPWAP tunnel; and
deleting, by the multi-service control gateway, the wireless access information of the user stored locally.

In a third aspect, an access controller is provided. The access controller includes:
a first sending module, configured to send a first control and provisioning of wireless access points CAPWAP tunnel establishment request to a multi-service control gateway, where the first CAPWAP tunnel establishment request is used for requesting to establish a first CAPWAP tunnel between the access controller and the multi-service control gateway, wherein the access controller is used for managing access points;
a first receiving module, configured to receive a first CAPWAP tunnel establishment response sent by the multi-service control gateway;
a second receiving module, configured to receive wireless access information of a user sent by an access point;
a third receiving module, configured to an association request sent by the user for requesting use of a wireless network;
a performing module, configured to association permission verification on the user; and
a second sending module, configured to send the wireless access information of the user to the multi-service control gateway through the first CAPWAP tunnel if the verification is passed.

In a first possible implementation manner of the third aspect, the wireless access information of the user received by the second receiving module includes: media access control MAC address information of an access point with which the user needs to be associated, service set identifier SSID information with which the user needs to be associated and MAC address information of a wireless network card of the user.

According to the third aspect or the first possible implementation manner of the third aspect, in a second possible implementation manner of the third aspect, the access controller further includes a third receiving module, configured to receive a second CAPWAP tunnel establishment request sent by the access point, where the CAPWAP tunnel establishment request is used for requesting to establish a second CAPWAP tunnel between the access controller and the access point; and
a third sending module, configured to send a second CAPWAP tunnel establishment response to the access point;
a fourth receiving module, configured to receive the wireless access information of the user sent by the access point through the second CAPWAP tunnel.

According to the third aspect or the first possible implementation manner of the third aspect or the second possible implementation manner of the third aspect, in a third possible implementation manner of the third aspect, the access controller further includes a fifth receiving module, configured to receive an association request sent by the user, where the association request is used for requesting to use a wireless network; and
a verifying module, configured to perform association permission verification on the user;
where the second sending module is specifically configured to send the wireless access information of the user to the multi-service control gateway through the first CAPWAP tunnel under a condition that the verification is passed.

According to the third aspect or the first possible implementation manner of the third aspect or the second possible implementation manner of the third aspect, in a fourth possible implementation manner of the third aspect, the access controller further includes a fifth receiving module, configured to receive an association request sent by the user, where the association request is used for requesting to use a wireless network; and
a verifying module, configured to cooperate with the access point in performing association permission verification on the user;
where the second sending module is specifically configured to send the wireless access information of the user to the multi-service control gateway through the first CAPWAP tunnel under a condition that the verification is passed.

According to the third or fourth possible implementation manner of the third aspect, in a fifth possible implementation manner of the third aspect, the access controller further includes a sixth receiving module, configured to receive a disassociation request sent by the user, where the disassociation request is used for requesting to disconnect a connection to the wireless network; and
a processing module, configured to disconnect the connection between the wireless network and the user.

In the fourth aspect, a multi-service control gateway is provided. The multi-service control gateway includes:
a first receiving module, configured to receive a first control and provisioning of wireless access points CAPWAP tunnel establishment request sent by an access controller, where the first CAPWAP tunnel establishment request is used for requesting to establish a first CAPWAP tunnel between the access controller
and the multi-service control gateway, wherein the access controller is used for managing access points;
a first sending module, configured to send a first CAPWAP tunnel establishment response to the access controller;
a second receiving module, configured to receive wireless access information of a user sent by the access controller through the first CAPWAP tunnel; and
a third receiving module, configured to receive a first access authentication request sent by the user; and
a second sending module configured to send, after the third receiving module receives the first access authentication request, a second access authentication request carrying parameters necessary for authenticating the user to an Authentication Authorization Accounting AAA authentication server according
   to the wireless access information of the user, so as for enabling the AAA authentication server to authenticate the user.

In a first possible implementation manner of the fourth aspect,, the wireless access information of the user includes: media access control MAC address information of an access point with which the user needs to be associated, service set identifier SSID information with which the user needs to be associated and MAC address information of a wireless network card of the user; and the parameters necessary for authenticating the user includes: the MAC address information of the access point with which the user needs to be associated and the SSID information with which the user needs to be associated.

According to the first possible implementation manner of the fourth aspect, in the second possible implementation manner of the fourth aspect, the multi-service control gateway further includes a storing module, configured to store the wireless access information of the user.

According to the second possible implementation manner of the fourth aspect, in the third possible implementation manner of the fourth aspect, the multi-service control gateway further includes a determining module, configured to determine the wireless access information of the user stored in the multi-service control gateway according to an MAC address of the user carried in the first access authentication request; and
an encapsulating module, configured to encapsulate the MAC address information of the access point with which the user needs to be associated and the SSID information with which the user needs to be associated, which are included in the wireless access information of the user, into the second access authentication request;
where the second sending module is further configured to send the second access authentication request encapsulated by the encapsulating module to the AAA authentication server.

According to the second possible implementation manner of the fourth aspect or the third possible implementation manner of the fourth aspect, in a fourth possible implementation manner of the fourth aspect, the multi-service control gateway further includes a fourth receiving module, configured to receive a request for deleting the wireless access information of the user sent by the access controller through the first CAPWAP tunnel; and a processing module, configured to delete the wireless access information of the user stored locally.

In the embodiments of the present invention, by establishing a CAPWAP tunnel between the AC and the MSCG, the AC is enabled to transmit wireless access information of a user to the MSCG under the condition that the AC is separate from the MSCG, and the MSCG further sends an authentication request to an authentication server, so as for enabling the server to perform access control on online of the user.

### BRIEF DESCRIPTION OF DRAWINGS

To illustrate technical solutions in the embodiments of the present invention or in the prior art more clearly, a brief introduction on the accompanying drawings which are needed in the description of the embodiments or the prior art is given below. Apparently, the accompanying drawings in the description below are merely some of the embodiments of the present invention, based on which other drawings may be obtained by those of ordinary skills in the art without any creative effort.
Fig. 1 is a schematic flowchart of a method for transmitting wireless information provided by an embodiment of the present invention;
Fig. 2 is a schematic flowchart of a method for transmitting wireless information provided by an embodiment of the present invention;
Fig. 3 is a schematic flowchart of a method for transmitting wireless information provided by an embodiment of the present invention;
Fig. 4 is a schematic structural diagram of an access controller provided by an embodiment of the present invention;
Fig. 5 is a schematic structural diagram of an access controller provided by an embodiment of the present invention;
Fig. 6 is a schematic structural diagram of a multi-service control gateway provided by an embodiment of the present invention;
Fig. 7 is a schematic structural diagram of a multi-service control gateway provided by an embodiment of the present invention;
Fig. 8 is a schematic structural diagram of an access controller provided by an embodiment of the present invention;
Fig. 9 is a schematic structural diagram of an access controller provided by an embodiment of the present invention;
Fig. 10 is a schematic structural diagram of a multi-service control gateway provided by an embodiment of the present invention; and
Fig. 11 is a schematic structural diagram of a multi-service control gateway provided by an embodiment of the present invention.

### DESCRIPTION OF EMBODIMENTS

To make the objectives, technical solutions, and advantages of the embodiments of the present invention clearer, the following clearly and completely describes the technical solutions of the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

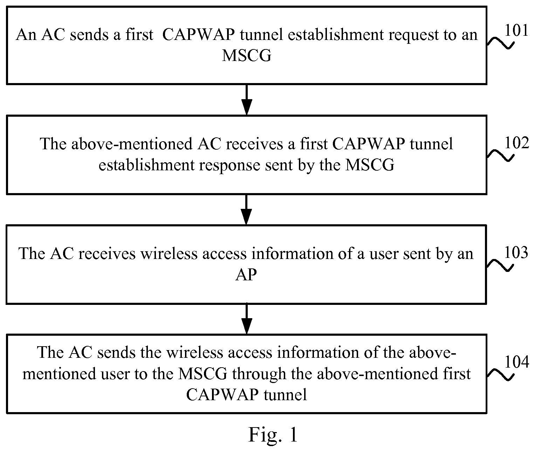

Fig. 1 is a schematic flowchart of a method for transmitting wireless information provided by an embodiment of the present invention. As shown in Fig. 1, the method includes:
S101. An access controller AC sends a first control and provisioning of wireless access points (Control And Provisioning of Wireless Access Points, referred to as CAPWAP for short) tunnel establishment request to a multi-service control gateway MSCG, where the first CAPWAP tunnel establishment request is used for requesting to establish a first CAPWAP tunnel.
S102. The access controller receives a first CAPWAP tunnel establishment response sent by the multi-service control gateway, where the first CAPWAP tunnel establishment response is used for representing that establishment of the first CAPWAP tunnel may be performed between the access controller and the multi-service control gateway, and the multi-service control gateway may be a broadband remote access server BRAS and the like, and the present invention is not limited hereto.
S103. The access controller receives wireless access information of a user sent by an access point AP. It should be noted that, the wireless access information of the user may include: media access control (Media Access Control, referred to as MAC for short) address information of an access point with which the user needs to be associated, service set identifier (Service Set Identifier) information with which the user needs to be associated and MAC address information of a wireless network card of the user.
S104. The access controller sends the wireless access information of the user to the multi-service control gateway through the first CAPWAP tunnel.

In a specific implementation process, after the AC is started, the AC establishes a CAPWAP tunnel with an MSCG by using a specified internet protocol (Internet Protocol, referred to as IP for short) address request, where a source IP address and a destination IP address of the tunnel may be configured manually, and the source IP address and the destination IP address of the tunnel may also be dynamically acquired in a dynamic host configuration protocol DHCP manner in combination with a DHCP-OPTION43 function.

Under a condition that the access controller is separate from the multi-service control gateway, a CAPWAP tunnel is established between the access controller and the multi-service control gateway, so that data information between the access controller and the multi-service control gateway may be transmitted through this tunnel.

In the present embodiment, by establishing the first CAPWAP tunnel between the AC and the MSCG, the AC may transmit wireless access information of a user to the MSCG through the tunnel, so as to enable the MSCG to view the wireless access information of the user.

In a specific implementation process, before the access controller receives the wireless access information of the user sent by the access point, the access controller receives a second CAPWAP tunnel establishment request sent by the access point, where the second CAPWAP tunnel establishment request is used for requesting to establish a second CAPWAP tunnel between the AC and the AP. The access controller sends a second CAPWAP tunnel establishment response to the access point, so as for representing that establishment of the second CAPWAP tunnel between the AC and the AP is performed. Consequently, the AC may receive the wireless access information of the user sent by the AP through the second CAPWAP tunnel. It should be noted that, an AP device is started, the AP device may actively request the AC to establish a CAPWAP tunnel after acquiring an IP address, and load of its configuration by the AP is completed after the tunnel is established. After the AP is started and the configuration is loaded, a WIFI network is available, and a user may access to the WIFI network.

Specifically, before the AC sends the wireless access information of the user to the MSCG through the first CAPWAP tunnel, the AC may receive an association reques sent by the user, where the association request is used for requesting to use a wireless network. The wireless network may be wireless fidelity (WLAN Fidelity, referred to as WIFI for short).

Association permission verification is performed on the user by the AC and/or AP. If the use passes the verification, the AC determines to send the wireless access information of the user to the multi-service control gateway through the first CAPWAP tunnel. It should be noted that, under a condition that the AC does not need to perform the permission verification, as long as the user passes the verification of the AP, association of the user may be completed.

Thereafter, the user needs to disconnect a connection with the wireless network. For example, the user disconnects an accessed WIFI network. Hence, the access controller may receive a disassociation request sent by the user, where the disassociation request is used for requesting to disconnect the connection with the wireless network. Subsequently, the AC disconnects the connection between the user and the wireless network, and the AC sends a request for deleting the wireless access information of the user to the multi-service control gateway through the first CAPWAP tunnel. After the user disconnets the wireless network, the multi-service control gateway, which may specifically be a BRAS, does not need to store the wireless access information of the user.

In the present embodiment, by establishing the first CAPWAP tunnel, the AC is enabled to send wireless access information of a user to the MSCG under the condition that the AC is separate from the MSCG, and moreover, the MSCG may send an authentication request to an AAA authentication server, so as for enabling the user accessed to the wireless network to acquire authentication of an authentication server.

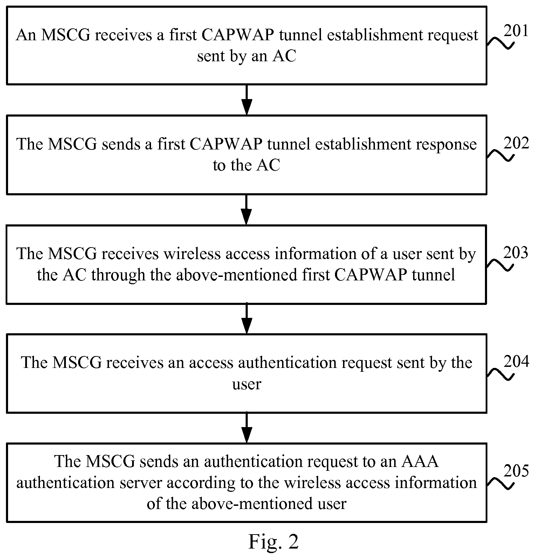

Fig. 2 is a schematic flowchart of a method for transmitting wireless information provided by an embodiment of the present invention. As shown in Fig. 2, the method includes:
S201. A multi-service control gateway MSCG receives a first CAPWAP tunnel establishment request sent by an access controller AC, where the first CAPWAP tunnel establishment request is used for requesting to establish a first CAPWAP tunnel.
S202. The multi-service control gateway sends a first CAPWAP tunnel establishment response to the AC, where the first CAPWAP tunnel establishment response is used for representing that establishment of the first CAPWAP tunnel between the AC and the MSCG is performed.
S203. The multi-service control gateway receives wireless access information of a user sent by the AC through the first CAPWAP tunnel, where the wireless access information of the user includes: MAC address information of an access point with which the user needs to be associated, SSID information with which the user needs to be associated and MAC address information of a wireless network card of the user.
S204. The multi-service control gateway receives a first access authentication request sent by the user, where the first access authentication request is used for requesting to authenticate and access to internet (internet). It should be noted that, prior to this step, the user completed association with the AC and the AP, namely, the user accesses to a wireless network, which may be WIFI.
S205. The multi-service control gateway sends a second access authentication request to an Authentication Authorization Accounting (Authentication Authorization Accounting, referred to as AAA for short) authentication server according to the wireless access information of the user, where the second access authentication request carries parameters necessary for authenticating the user, so as enable the AAA authentication server to authenticate the user. If the authentication is successful, a message for indicating that the authentication is successful may be fed back to the user, so as to allow the user to go online. It should be noted that, the parameters necessary for authenticating the user include the MAC address information of the access point with which the user needs to be associated and the SSID information of a network with which the user needs to be associated.

In the present embodiment, by establishing a CAPWAP tunnel between the AC and the MSCG, the AC may send wireless access information of a user to the MSCG, and an authentication request encapsulated with the information may be further sent to an authentication server, so as to enable the server to perform access control on online of the user.

In a specific implementation process, after the multi-service control gateway receives the wireless access information of the user sent by the AC through the first CAPWAP tunnel, the multi-service control gateway may store the wireless access information of the user. Specifically, the MSCG may store the wireless access information by using the MAC address information of the wireless network card of the user as a keyword. Consequently, the multi-service control gateway may determine, according to an MAC address of a user carried in the first access authentication request, the wireless access information of the user that is stored by the MSCG, namely, the multi-service control gateway may query, according to the MAC address, wireless access information of a user that is stored locally and corresponds to a MAC address of a user same as the MAC address of the user.

The multi-service control gateway may encapsulate the MAC address information of the access point with which the user needs to be associated, the SSID information with which the user needs to be associated and the MAC address information of the wireless network card of the user, which are included in the wireless access information of the user, into the second access authentication request, and sends the encapsulated second access authentication request to the AAA authentication server. In other words, the parameters necessary for authenticating the user are encapsulated into the second access authentication request. More specifically, the information may be encapsulated into a standard remote authentication dial-in user service RADIUS authentication request packet, namely encapsulated into a standard RADIUS attribute calling-station-id. The information is sent to the AAA authentication server after being encapsulated. The AAA authentication server authenticates the user, and may feed back information to the user if the authentication is successful allow the user to go online, and meanwhile, the AAA authentication server stores the calling-station-id, so as to facilitate querying the wireless access information of the user in the authentication server.

After the user disconnects a wireless connection, the multi-service control gateway receives a request that is for deleting the wireless access information of the user and that is sent by the access controller through the first CAPWAP tunnel. After the request is received, the multi-service control gateway may delete the wireless access information of a corresponding user stored locally.

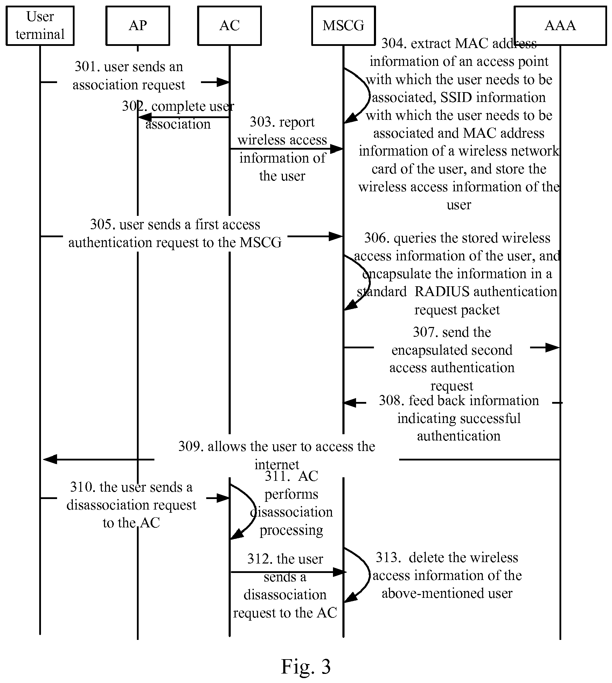

Fig. 3 is a schematic flowchart of a method for transmitting wireless information provided by an embodiment of the present invention. As shown in Fig. 3, according to the foregoing method, after a CAPWAP tunnel is established between an AP and an AC and a CAPWAP tunnel is established between the AC and an MSCG, the entire authentication access process includes:
S301. a user sends an association request for requesting to associate use of a wireless network. The wireless network may be WIFI.
S302. Association permission verification is performed on the user by the AC and/or the AP, and association of the user is completed after the verification is completed.
S303. The AC reports wireless access information of the user to the MSCG through a first CAPWAP tunnel established between the AC and the MSCG.
S304. The MSCG extracts, MAC address information of an access point with which the user needs to be associated, SSID information with which the user needs to be associated and MAC address information of a wireless network card of the user, from the received wireless access information of the user, and stores the wireless access information of the user by using the MAC address of the wireless network card of the user as a keyword.

The wireless access information may be implemented by expanding an existing CAPWAP protocol, and multiple private CAPWAP control message elements may be added in a CAPWAP packet, which may specifically includes: the MAC address information of the access point with which the user needs to be associated, SSID information with which the user needs to be associated and MAC address information of the wireless network card of the user. Table 1 and table 2 are respectively referred to for two feasible formats of a CAPWAP packet with the newly added control message elements :

**Table 1**

| | | | | |
|---|---|---|---|---|
| IP header | UDP header | CAPWAP header | Control header | Message element |

**Table 2**

| | | | | | | | |
|---|---|---|---|---|---|---|---|
| IP header | UDP header | CAPWAP DTLS header | DTLS header | CAPWAP header | Control header | Message element | DTLS tail |

The MAC address information of the access point with which the user needs to be associated, SSID information with which the user needs to be associated and MAC address information of the wireless network card of the user, may be carried in the message element in table 1 or table 2. Table 1 is different from table 2 in that, the CAPWAP datagram transport layer security (Datagram Transport Layer Security, DTLS) header, the DTLS header and the DTLS tail are newly added in table 2 with respect to table 1, so as for encrypting the CAPWAP packet.

S305. The user sends a first access authentication request to the MSCG, so as for requesting to authenticate and access to internet (internet).

S306. The MSCG queries the wireless access information of the user stored in S304 based on the MAC address of the wireless network card of the user, and encapsulates the information in a standard RADIUS authentication request packet. More specifically, a format may be AP-MAC+SSID.

S307. The encapsulated second access authentication request is sent to an AAA authentication server.

S308. The AAA authentication server authenticates the user. If the authentication is successful, the AAA feeds back information indicating successful authentication to the MSCG, and meanwhile stores calling-station-id.

S309. After receiving the information indicating successful authentication, the MSCG allows the user to access the internet.

S310. The user sends a disassociation request to the AC to disconnect a wireless connection.

S311. The AC performs disassociation processing to enable the user to disconnect the wireless connection.

S312. After the disassociation is completed, the AC sends a request for deleting the wireless access information of the user to the MSCG through the first CAPWAP tunnel.

S313. The MSCG deletes the stored wireless access information of the user.

The AC is added with a CAPWAP-tunnel-client (CAPWAP-tunnel-client) function, and the MSCG is added with a CAPWAP-tunnel-server (CAPWAP-tunnel- server) function.

In the present embodiment, by establishing the first CAPWAP tunnel, the AC is enabled to send wireless access information of a user to the MSCG under the condition that the AC is separate from the MSCG, and moreover, an authentication request is sent to an AAA authentication server, so as for enabling a user accessed to the wireless network to acquire authentication of an authentication server.

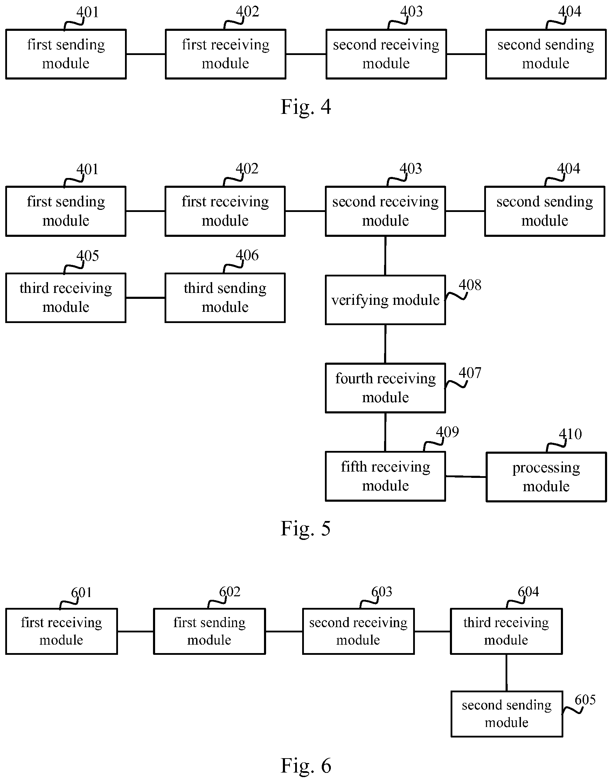

Fig. 4 is a schematic structural diagram of an access controller provided by an embodiment of the present invention. As shown in Fig. 4, the access controller includes: a first sending module 401, a first receiving module 402, a second receiving module 403 and a second sending module 404.

The first sending module 401 is configured to send a first control and provisioning of wireless access points CAPWAP tunnel establishment request to a multi-service control gateway, where the first CAPWAP tunnel establishment request is used for requesting to establish a first CAPWAP tunnel.

The first receiving module 402 is configured to receive a first CAPWAP tunnel establishment response sent by the multi-service control gateway, where the first CAPWAP tunnel establishment response is used for representing that establishment of the first CAPWAP tunnel between the access controller and the multi-service control gateway is performed.

The second receiving module 403 is configured to receive wireless access information of a user sent by an access point. It should be noted that, the wireless access information of the user received by the second receiving module 403 includes: media access control MAC address information of an access point with which the user needs to be associated, service set identifier SSID information with which the user needs to be associated and MAC address information of a wireless network card of the user.

After the first CAPWAP tunnel is established, the second sending module 404 may send the wireless access information of the user to the multi-service control gateway through the first CAPWAP tunnel.

Fig. 5 is a schematic structural diagram of an access controller provided by an embodiment of the present invention. As shown in Fig. 5, on the basis of Fig. 4, the access controller includes: a third receiving module 405, a third sending module 406, a fourth receiving module 407, a verifying module 408, a fifth receiving module 409 and a processing module 410. In a specific implementation process, before the access controller receives wireless access information of a user sent by an access point,
the third receiving module 405 is configured to receive a second CAPWAP tunnel establishment request sent by the access point, where the second CAPWAP tunnel establishment request is used for requesting to establish a second CAPWAP tunnel between the access controller and the access point.

The third sending module 406 is configured to send a second CAPWAP tunnel establishment response to the access point, where the second CAPWAP tunnel establishment response is used for representing that establishment of the second CAPWAP tunnel between the access controller and the access point is performed.

The second receiving module 403 is configured to receive the wireless access information of the user sent by the access point through the second CAPWAP tunnel.

The fourth receiving module 407 is configured to receive an association request sent by the user, before the access controller sends the wireless access information of the user to the multi-service control gateway through the first CAPWAP tunnel, where the association request is used for requesting to use a wireless network.

The verifying module 408 is configured to perform association permission verification on the user.

The second sending module 404 is specifically configured to send the wireless access information of the user to the multi-service control gateway through the first CAPWAP tunnel under a condition that the verification is passed.

In addition, when the user is about to disconnect a connection with the wireless network, the fifth receiving module 409 is configured to receive a disassociation request sent by the user, where the disassociation request is used for requesting to disconnect the connection with the wireless network. After receiving the disassociation request, the processing module 410 disconnects the connection between the user and the wireless network. The method embodiment of Fig. 1 may be referred to for a working manner of the modules, which may not be repeated redundantly herein.

In the present embodiment, by establishing the first CAPWAP tunnel, under the condition that the AC is separate from the MSCG, the AC may send the wireless access information of the user to the MSCG through the sending module, and the MSCG may further send an authentication request to an AAA authentication server, so as for enabling the server to control online of the user.

Fig. 6 is a schematic structural diagram of a multi-service control gateway provided by an embodiment of the present invention. As shown in Fig. 6, the multi-service control gateway includes: a first receiving module 601, a first sending module 602, a second receiving module 603, a third receiving module 604 and a second sending module 605.

The first receiving module 601 is configured to receive a first control and provisioning of wireless access points CAPWAP tunnel establishment request sent by an access controller, where the first CAPWAP tunnel establishment request is used for requesting to establish a first CAPWAP tunnel.
the first sending module 602 is configured to send a first CAPWAP tunnel establishment response to the access controller, where the first CAPWAP tunnel establishment response is used for representing that establishment the first CAPWAP tunnel between the access controller and the multi-service control gateway is performed.

After the first CAPWAP tunnel is established, the second receiving module 603 receives the wireless access information of a user sent by the access controller through the first CAPWAP tunnel.

The third receiving module 604 is configured to receive a first access authentication request sent by the user.

It should be noted that, the wireless access information of the user received by the second receiving module 603 includes: media access control MAC address information of an access point with which the user needs to be associated, service set identifier SSID information with which the user needs to be associated and MAC address information of a wireless network card of the user.

After the third receiving module 604 receives the first access authentication request, the second sending module 605 may send a second access authentication request carrying parameters necessary for authenticating the user to an Authentication Authorization Accounting AAA authentication server according to the wireless access information of the user, so as for enabling the AAA authentication server to authenticate the user. The parameters necessary for authenticating the user include the MAC address information of the access point with which the user needs to be associated and the SSID information with which the user needs to be associated.

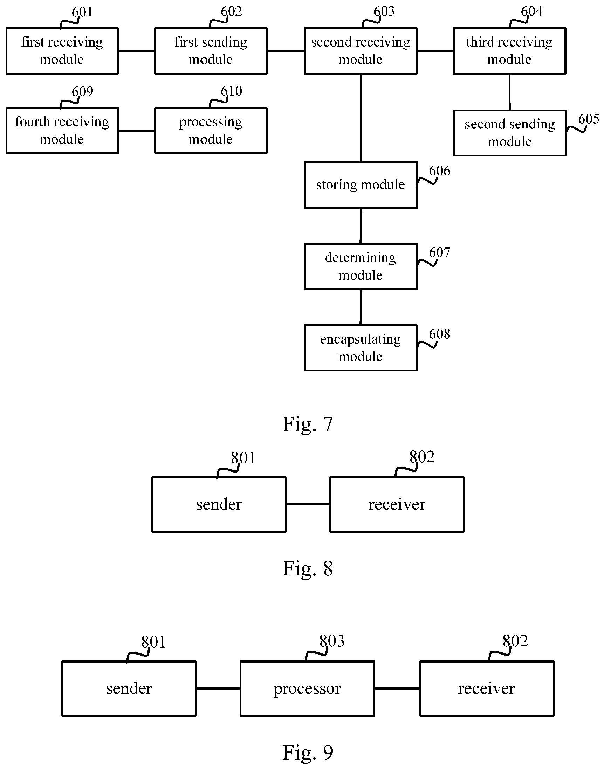

Fig. 7 is a schematic structural diagram of a multi-service control gateway provided by an embodiment of the present invention. As shown in Fig. 7, on the basis of Fig. 6, the multi-service control gateway further includes: a storing module 606, a determining module 607, an encapsulating module 608, a fourth receiving module 609 and a processing module 610. After the wireless access information of the user sent by the access controller is received,
the storing module 606 stores the wireless access information of the user by using the MAC address information of the wireless network card of the user as a keyword.

It should be noted that, the sending an authentication request to the AAA authentication server may be implemented in the following manner: the determining module 607 may determine the wireless access information of the user stored in the multi-service control gateway according to an MAC address of a user carried in the first access authentication request; and
the encapsulating module 608 encapsulates the MAC address information of the access point with which the user needs to be associated and the SSID information with which the user needs to be associated, which are included in the wireless access information of the user, into the second access authentication request, and sends the second access authentication request to the AAA authentication server.

In addition, when the user disconnects a connection with the wireless network, the fourth receiving module 609 receives a request for deleting the wireless access information of the user sent by the access controller through the first CAPWAP tunnel; and consequently, the processing module 610 deletes the wireless access information of the user stored locally.

The method embodiment of Fig. 2 may be referred to for a working manner of the modules, which may not be repeated redundantly herein.

In the present embodiment, by establishing the first CAPWAP tunnel, under the condition that the AC is separate from the MSCG, the MSCG may receive the wireless access information of the user sent by the AC through the receiving module, and further the authentication request encapsulated with the wireless access information of the user is sent to the AAA authentication server, so as for enabling the server to control online of the user.

Fig. 8 is a schematic diagram of a structure of an access controller provided by an embodiment of the present invention. As shown in Fig. 8, the access controller includes: a sender 801 and a receiver 802.

The sender 801 is configured to send a first control and provisioning of wireless access points CAPWAP tunnel establishment request to a multi-service control gateway, where the first CAPWAP tunnel establishment request is used for requesting to establish a first CAPWAP tunnel.

The receiver 802 is configured to receive a first CAPWAP tunnel establishment response sent by the multi-service control gateway, and receive wireless access information of a user sent by an access point. It should be noted that, the wireless access information of the user received by the receiver 802 includes: media access control MAC address information of an access point with which the user needs to be associated, service set identifier SSID information with which the user needs to be associated and MAC address information of a wireless network card of the user.

After the first CAPWAP tunnel is established, the sender 801 may send the wireless access information of the user to the multi-service control gateway through the first CAPWAP tunnel.

In addition, before the access controller receives the wireless access information of the user sent by the access point, the receiver 802 is further configured to receive a second CAPWAP tunnel establishment request sent by the access point, where the second CAPWAP tunnel establishment request is used for requesting to establish a second CAPWAP tunnel between the access controller and the access point.

The sender 801 is configured to send a second CAPWAP tunnel establishment response to the access point.

After the second CAPWAP tunnel is established, the receiver receives the wireless access information of the user sent by the access point through the second CAPWAP tunnel.

Fig. 9 is a schematic diagram of a structure of an access controller provided by an embodiment of the present invention. As shown in Fig. 9, on the basis of Fig. 8, the access controller further includes: a processor 803, specifically,
the receiver 802 is further configured to receive an association request sent by the user, where the association request is used for requesting to use a wireless network;
the processor 803 is configured to perform association permission verification on the user; and
if the verification is passed, the sender 801 determines to send the wireless access information of the user to the multi-service control gateway through the first CAPWAP tunnel.

In a specific implementation process, when the user is about to disconnect a connection with the wireless network, the receiver 802 is further configured to receive a disassociation request sent by the user, where the disassociation request is used for requesting to disconnect the connection with the wireless network. After the disassociation request is received, the processor 803 disconnects the connection between the user and the wireless network.

The method embodiment of Fig. 1 may be referred to for working manners of the sender, the receiver and the processor, which may not be repeated redundantly herein.

In the present embodiment, by establishing the first CAPWAP tunnel, under the condition that the AC is separate from the MSCG, the AC may send the wireless access information of the user to the MSCG through the sender, and the MSCG may further send an authentication request to an AAA authentication server, so as for enabling the server to control online of the user.

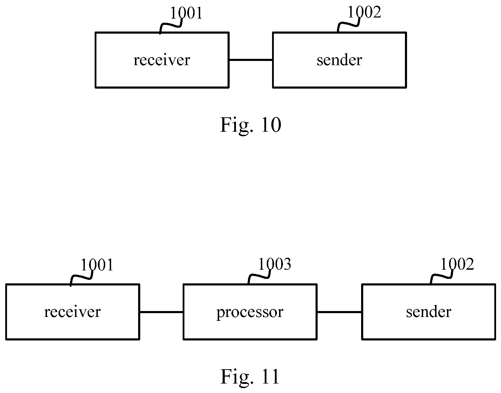

Fig. 10 is a schematic diagram of a structure of a multi-service control gateway provided by an embodiment of the present invention. As shown in Fig. 10, the multi-service control gateway includes: a receiver 1001 and a sender 1002, where,
the receiver 1001 is configured to receive a first control and provisioning of wireless access points CAPWAP tunnel establishment request sent by an access controller, where the first CAPWAP tunnel establishment request is used for requesting to establish a first CAPWAP tunnel; and
the sender 1002 is configured to send a first CAPWAP tunnel establishment response to the access controller.

After the first CAPWAP tunnel is established, the receiver 1001 may receive wireless access information of a user sent by the access controller through the first CAPWAP tunnel, and may also receive a first access authentication request sent by the user. It should be noted that, the wireless access information of the user received by the receiver 1001 includes: media access control MAC address information of an access point with which the user needs to be associated, service set identifier SSID information with which the user needs to be associated and MAC address information of a wireless network card of the user.

The sender 1002 may send a second access authentication request carrying parameters necessary for authenticating the user to an Authentication Authorization Accounting AAA authentication server according to the wireless access information of the user, so as for enabling the AAA authentication server to authenticate the user. The parameters necessary for authenticating the user include the MAC address information of the access point with which the user needs to be associated and the SSID information with which the user needs to be associated.

Fig. 11 is a schematic diagram of a structure of a multi-service control gateway provided by an embodiment of the present invention. As shown in Fig. 11, on the basis of Fig. 10, the multi-service control gateway further includes: a processor 1003. Specifically, after the wireless access information of the user sent by the access controller is received,
the processor 1003 is configured to store the wireless access information of the user.

Thereafter, the sending an authentication request to the AAA authentication server may be implemented in the following manner: the processor 1003 may further determine the wireless access information of the user stored in the multi-service control gateway according to an MAC address of the user carried in the first access authentication request; encapsulate the MAC address information of the access point with which the user needs to be associated and the SSID information with which the user needs to be associated, which are included in the wireless access information of the user, into the second access authentication request, and send the second access authentication request to the AAA authentication server.

When the user disconnects a connection with the wireless network, the receiver 1001 receives a request for deleting the wireless access information of the user sent by the access controller through the first CAPWAP tunnel; and consequently, the processor 1003 deletes the wireless access information of the user stored locally.

The method embodiment of Fig. 2 may be referred to for working manners of the receiver, the sender and the processor, which may not be repeated redundantly herein.

In the present embodiment, by establishing the first CAPWAP tunnel, under the condition that the AC is separate from the MSCG, the MSCG may receive the wireless access information of the user sent by the AC through the receiver, and further, the authentication request encapsulated with the wireless access information of the user is sent to the AAA authentication server, so as for enabling the server to control online of the user.

Those of ordinary skills in the art may understand that all or a part of the steps of the method embodiments may be implemented by a program instructing relevant hardware. The foregoing program may be stored in a computer readable storage medium. When the program is running, the steps of the respective method embodiments are implemented. The foregoing program includes a variety of media capable of storing program codes, such as an ROM, an RAM, a magnetic disk, an optical disk or the like.

Finally, it should be noted that, the respective embodiments are merely used for illustrating, rather than limiting, the technical solutions of the present invention. Although the present invention is described in detail with reference to the foregoing respective embodiments, those of ordinary skills in the art should understand that, modifications still could be made to the technical solutions disclosed in the foregoing embodiments, and these modifications do not make the essence of corresponding technical solutions depart from the scope of the technical solutions of the respective embodiments of the present invention.

## Claims

1. A method for transmitting wireless information, comprising:
sending (101), by an access controller, a first control and provisioning of wireless access points, CAPWAP, tunnel establishment request to a multi-service control gateway, wherein the first CAPWAP tunnel establishment request is used for requesting to establish a first CAPWAP tunnel between the access controller and the multi-service control gateway, wherein the access controller is used for managing access points;
receiving (102), by the access controller, a first CAPWAP tunnel establishment response sent by the multi-service control gateway;
receiving (103), by the access controller, wireless access information of a user sent by an access point;
receiving, by the access controller, an association request sent by the user for requesting use of a wireless network;
performing, by the access controller, association permission verification on the user; and
sending (104), by the access controller if the verification is passed, the wireless access information of the user to the multi-service control gateway through the first CAPWAP tunnel.

2. The method according to claim 1, wherein the wireless access information of the user comprises: media access control, MAC, address information of an access point with which the user needs to be associated, service set identifier, SSID, information with which the user needs to be associated and MAC address information of a wireless network card of the user.

3. The method according to claim 1 or 2, wherein before the receiving, by the access controller, wireless access information of a user sent by an access point, the method further comprises:
receiving, by the access controller, a second CAPWAP tunnel establishment request sent by the access point, wherein the second CAPWAP tunnel establishment request is used for requesting to establish a second CAPWAP tunnel between the access controller and the access point;
sending, by the access controller, a second CAPWAP tunnel establishment response to the access point; and
receiving, by the access controller, the wireless access information of the user sent by the access point through the second CAPWAP tunnel.

4. The method according to any one of claims 1 to 3, wherein before the sending, by the access controller, the wireless access information of the user to the multi-service control gateway through the first CAPWAP tunnel, the method further comprises:
receiving, by the access controller, a association request sent by the user, wherein the association request is used for requesting to use a wireless network;
performing, by the access controller association permission verification on the user, and if the verification is passed, determining, by the access controller, to send the wireless access information of the user to the multi-service control gateway through the first CAPWAP tunnel.

5. A method for transmitting wireless information, comprising:
receiving (201), by a multi-service control gateway, a first control and provisioning of wireless access points, CAPWAP, tunnel establishment request sent by an access controller, wherein the first CAPWAP tunnel establishment request is used for requesting to establish a first CAPWAP tunnel between the access controller and the multi-service control gateway, wherein the access controller is used for managing access points;
sending (202), by the multi-service control gateway, a first CAPWAP tunnel establishment response to the access controller;
receiving (203), by the multi-service control gateway, wireless access information of a user sent by the access controller through the first CAPWAP tunnel;
receiving (204), by the multi-service control gateway, a first access authentication request sent by the user; and
after the first access authentication request is received, sending (205), by the multi-service control gateway, a second access authentication request carrying parameters necessary for authenticating the user to an Authentication Authorization Accounting, AAA, authentication server according to the wireless access information of the user.

6. The method according to claim 5, wherein the wireless access information of the user comprises:
media access control, MAC, address information of an access point with which the user needs to be associated, service set identifier, SSID, information with which the user needs to be associated and MAC address information of a wireless network card of the user; and
the parameters necessary for authenticating the user comprise: the MAC address information of the access point with which the user needs to be associated and the SSID information with which the user needs to be associated.

7. The method according to claim 6, wherein the after the first access authentication request is received, sending, by the multi-service control gateway, a second access authentication request to an Authentication Authorization Accounting, AAA, authentication server according to the wireless access information of the user, comprises:
determining, by the multi-service control gateway, the wireless access information of the user stored in the multi-service control gateway according to an MAC address of the user carried in the first access authentication request; and
encapsulating, by the multi-service control gateway, the MAC address information of the access point with which the user needs to be associated and the SSID information with which the user needs to be associated, which are comprised in the wireless access information of the user, into the second access authentication request, and sending the second access authentication request to the AAA authentication server.

8. An access controller, comprising:
a first sending module (401), configured to send a first control and provisioning of wireless access points, CAPWAP, tunnel establishment request to a multi-service control gateway, wherein the first CAPWAP tunnel establishment request is used for requesting to establish a first CAPWAP tunnel between the access controller and the multi-service control gateway, wherein the access controller is used for managing access points;
a first receiving module (402), configured to receive a first CAPWAP tunnel establishment response sent by the multi-service control gateway;
a second receiving module (403), configured to receive wireless access information of a user sent by an access point;
a third receiving module, configured to receive an association request sent by the user for requesting use of a wireless network;
a performing module, configured to perform association permission verification on the user; and
a second sending module (404), configured to send the wireless access information of the user to the multi-service control gateway through the first CAPWAP tunnel if the verification is passed.

9. The access controller according to claim 8, wherein the wireless access information of the user received by the second receiving module comprises: media access control, MAC, address information of an access point with which the user needs to be associated, service set identifier, SSID, information with which the user needs to be associated and MAC address information of a wireless network card of the user.

10. The access controller according to claim 8, further comprising:
a third receiving module, configured to receive a second CAPWAP tunnel establishment request sent by the access point, wherein the second CAPWAP tunnel establishment request is used for requesting to establish a second CAPWAP tunnel between the access controller and the access point; and
a third sending module, configured to send a second CAPWAP tunnel establishment response to the access point;
wherein the second receiving module is configured to receive the wireless access information of the user sent by the access point through the second CAPWAP tunnel.

11. The access controller according to any one of claims 8 to 10, further comprising:
a fourth receiving module, configured to receive an association request sent by the user before the access controller sends the wireless access information of the user to the multi-service control gateway through the first CAPWAP tunnel, wherein the association request is used for requesting to use a wireless network; and
a verifying module, configured to perform association permission verification on the user;
wherein the second sending module is specifically configured to send the wireless access information of the user to the multi-service control gateway through the first CAPWAP tunnel under a condition that the verification is passed.

12. A multi-service control gateway, comprising:
a first receiving module (601), configured to receive a first control and provisioning of wireless access points, CAPWAP, tunnel establishment request sent by an access controller, wherein the first CAPWAP tunnel establishment request is used for requesting to establish a first CAPWAP tunnel between the access controller and the multi-service control gateway, wherein the access controller is used for managing access points;
a first sending module (602), configured to send a first CAPWAP tunnel establishment response to the access controller;
a second receiving module (603), configured to receive wireless access information of a user sent by the access controller through the first CAPWAP tunnel;
a third receiving module (604), configured to receive a first access authentication request sent by the user; and
a second sending module (605), configured to send, after the third receiving module receives the first access authentication request, a second access authentication request carrying parameters necessary for authenticating the user to an Authentication Authorization Accounting, AAA, authentication server according to the wireless access information of the user.

13. The multi-service control gateway according to claim 12, wherein the wireless access information of the user comprises: media access control, MAC, address information of an access point with which the user needs to be associated, service set identifier, SSID, information with which the user needs to be associated and MAC address information of a wireless network card of the user; and
the parameters necessary for authenticating the user comprise: the MAC address information of the access point with which the user needs to be associated and the SSID information with which the user needs to be associated.

14. The multi-service control gateway according to claim 12, further comprising:
a determining module, configured to determine the wireless access information of the user stored in the multi-service control gateway according to an MAC address of the user carried in the first access authentication request; and
an encapsulating module, configured to encapsulate the MAC address information of the access point with which the user needs to be associated and the SSID information with which the user needs to be associated, which are comprised in the wireless access information of the user, into the second access authentication request;
wherein the second sending module is further configured to send the second access authentication request encapsulated by the encapsulating module to the AAA authentication server.

15. The multi-service control gateway according to claim 14, further comprising:
a fourth receiving module, configured to receive a request for deleting the wireless access information of the user sent by the access controller through the first CAPWAP tunnel; and
a processing module, configured to delete the wireless access information of the user stored locally.

## Patentansprüche

1. Verfahren zum Übertragen von drahtlosen Informationen, das Folgendes umfasst:
Senden (101) einer ersten Tunneleinrichtungsanforderung für die Steuerung und Bereitstellung von drahtlosen Zugangspunkten, CAPWAP, durch eine Zugangssteuerung an ein Mehrfachdienststeuergateway, wobei die erste CAPWAP-Tunneleinrichtungsanforderung zum Anfordern der Einrichtung eines ersten CAPWAP-Tunnels zwischen der Zugangssteuerung und dem Mehrfachdienststeuergateway verwendet wird, wobei die Zugangssteuerung zum Verwalten von Zugangspunkten verwendet wird;
Empfangen (102) einer ersten CAPWAP-Tunneleinrichtungsantwort, die vom Mehrfachdienststeuergateway gesendet wurde, durch die Zugangssteuerung;
Empfangen (103) von Drahtloszugangsinformationen eines Benutzers, die von einem Zugangspunkt gesendet wurden, durch die Zugangssteuerung;
Empfangen einer Verknüpfungsanforderung, die vom Benutzer zum Anfordern der Verwendung eines drahtlosen Netzwerks gesendet wurde, durch die Zugangssteuerung;
Durchführen einer Verknüpfungszulassungsverifizierung am Benutzer durch die Zugangssteuerung und
Senden (104) der Drahtloszugangsinformationen des Benutzers durch die Zugangssteuerung über den ersten CAPWAP-Tunnel an das Mehrfachdienststeuergateway, wenn die Verifizierung bestanden wird.

2. Verfahren nach Anspruch 1, wobei die Drahtloszugangsinformationen des Benutzers Folgendes umfassen:
Medienzugriffssteuerungs(MAC)-Adressinformationen zu einem Zugangspunkt, mit dem der Benutzer verknüpft werden muss, Dienstsatzkennungs(SSID)-Informationen, mit denen der Benutzer verknüpft werden muss, und MAC-Adressinformationen einer Drahtlosnetzwerkkarte des Benutzers.

3. Verfahren nach Anspruch 1 oder 2, wobei das Verfahren vor dem Empfangen von Drahtloszugangsinformationen eines Benutzers, die von einem Zugangspunkt gesendet werden, durch die Zugangssteuerung ferner Folgendes umfasst:
Empfangen einer zweiten CAPWAP-Tunneleinrichtungsanforderung, die vom Zugangspunkt gesendet wurde, durch die Zugangssteuerung, wobei die zweite CAPWAP-Tunneleinrichtungsanforderung zum Anfordern der Einrichtung eines zweiten CAPWAP-Tunnels zwischen der Zugangssteuerung und dem Zugangspunkt verwendet wird;
Senden einer zweiten CAPWAP-Tunneleinrichtungsantwort durch die Zugangssteuerung an den Zugangspunkt und
Empfangen der Drahtloszugangsinformationen des Benutzers, die vom Zugangspunkt über den zweiten CAPWAP-Tunnel gesendet wurden, durch die Zugangssteuerung.

4. Verfahren nach einem der Ansprüche 1 bis 3, wobei das Verfahren vor dem Senden der Drahtloszugangsinformationen des Benutzers durch die Zugangssteuerung über den ersten CAPWAP-Tunnel an das Mehrfachdienststeuergateway ferner Folgendes umfasst:
Empfangen einer Verknüpfungsanforderung, die vom Benutzer gesendet wurde, durch die Zugangssteuerung, wobei die Verknüpfungsanforderung zum Anfordern der Verwendung eines drahtlosen Netzwerks verwendet wird;
Durchführen einer Verknüpfungszulassungsverifizierung durch die Zugangssteuerung am Benutzer und, wenn die Verifizierung bestanden wird, Bestimmen durch die Zugangssteuerung, dass die Drahtloszugangsinformationen des Benutzers über den ersten CAPWAP-Tunnel an das Mehrfachdienststeuergateway zu senden sind.

5. Verfahren zum Übertragen von drahtlosen Informationen, das Folgendes umfasst:
Empfangen (201) einer ersten Tunneleinrichtungsanforderung für die Steuerung und Bereitstellung von drahtlosen Zugangspunkten, CAPWAP, die von einer Zugangssteuerung gesendet wurde, durch ein Mehrfachdienststeuergateway, wobei die erste CAPWAP-Tunneleinrichtungsanforderung zum Anfordern der Einrichtung eines ersten CAPWAP-Tunnels zwischen der Zugangssteuerung und dem Mehrfachdienststeuergateway verwendet wird, wobei die Zugangssteuerung zum Verwalten von Zugangspunkten verwendet wird;
Senden (202) einer ersten CAPWAP-Tunneleinrichtungsantwort durch das Mehrfachdienststeuergateway an die Zugangssteuerung;
Empfangen (203) von Drahtloszugangsinformationen eines Benutzers, die von der Zugangssteuerung über den ersten CAPWAP-Tunnel gesendet wurden, durch das Mehrfachdienststeuergateway;
Empfangen (204) einer ersten Zugangsauthentifizierungsanforderung, die vom Benutzer gesendet wurde, durch das Mehrfachdienststeuergateway und
nachdem die erste Zugangsauthentifizierungsanforderung empfangen wurde, Senden (205) einer zweiten Zugangsauthentifizierungsanforderung, die Parameter enthält, die zum Authentifizieren des Benutzers erforderlich sind, gemäß den Drahtloszugangsinformationen des Benutzers durch das Mehrfachdienststeuergateway an einen Authentifizierungs-, Autorisierungs-, Abrechnungs(AAA)-Authentifizierungsserver.

6. Verfahren nach Anspruch 5, wobei die Drahtloszugangsinformationen des Benutzers Folgendes umfassen:
Medienzugriffssteuerungs(MAC)-Adressinformationen zu einem Zugangspunkt, mit dem der Benutzer verknüpft werden muss, Dienstsatzkennungs(SSID)-Informationen, mit denen der Benutzer verknüpft werden muss, und MAC-Adressinformationen einer Drahtlosnetzwerkkarte des Benutzers und
die Parameter, die zum Authentifizieren des Benutzers erforderlich sind, Folgendes umfassen: die MAC-Adressinformationen des Zugangspunktes, mit dem der Benutzer verknüpft werden muss, und die SSID-Informationen, mit denen der Benutzer verknüpft werden muss.

7. Verfahren nach Anspruch 6, wobei, nachdem die erste Zugangsauthentifizierungsanforderung empfangen wurde, das Senden einer zweiten Zugangsauthentifizierungsanforderung gemäß den Drahtloszugangsinformationen des Benutzers durch das Mehrfachdienststeuergateway an einen Authentifizierungs-, Autorisierungs-, Abrechnungs(AAA)-Authentifizierungsserver Folgendes umfasst:
Bestimmen der Drahtloszugangsinformationen des Benutzers, die im Mehrfachdienststeuergateway gespeichert sind, durch das Mehrfachdienststeuergateway gemäß einer MAC-Adresse des Benutzers, die in der ersten Zugangsauthentifizierungsanforderung enthalten ist; und
Kapseln der MAC-Adressinformationen des Zugangspunktes, mit dem der Benutzer verknüpft werden muss, und der SSID-Informationen, mit denen der Benutzer verknüpft werden muss, die in den Drahtloszugangsinformationen des Benutzers umfasst sind, in die zweite Zugangsauthentifizierungsanforderung und Senden der zweiten Zugangsauthentifizierungsanforderung an den AAA-Authentifizierungsserver durch das Mehrfachdienststeuergateway.

8. Zugriffssteuerung, die Folgendes umfasst:
ein erstes Sendemodul (401), das dazu ausgelegt ist, eine erste Tunneleinrichtungsanforderung für die Steuerung und Bereitstellung von drahtlosen Zugangspunkten, CAPWAP, an ein Mehrfachdienststeuergateway zu senden, wobei die erste CAPWAP-Tunneleinrichtungsanforderung zum Anfordern der Einrichtung eines ersten CAPWAP-Tunnels zwischen der Zugangssteuerung und dem Mehrfachdienststeuergateway verwendet wird, wobei die Zugangssteuerung zum Verwalten von Zugangspunkten verwendet wird;
ein erstes Empfangsmodul (402), das dazu ausgelegt ist, eine erste CAPWAP-Tunneleinrichtungsantwort, die vom Mehrfachdienststeuergateway gesendet wurde, zu empfangen;
ein zweites Empfangsmodul (403), das dazu ausgelegt ist, Drahtloszugangsinformationen eines Benutzers, die von einem Zugangspunkt gesendet wurden, zu empfangen;
ein drittes Empfangsmodul, das dazu ausgelegt ist, eine Verknüpfungsanforderung, die vom Benutzer zum Anfordern der Verwendung eines drahtlosen Netzwerks gesendet wurde, zu empfangen;
ein Durchführungsmodul, das dazu ausgelegt ist, eine Verknüpfungszulassungsverifizierung am Benutzer durchzuführen; und
ein zweites Sendemodul (404), das dazu ausgelegt ist, die Drahtloszugangsinformationen des Benutzers über den ersten CAPWAP-Tunnel an das Mehrfachdienststeuergateway zu senden, wenn die Verifizierung bestanden wird.

9. Zugangssteuerung nach Anspruch 8, wobei die Drahtloszugangsinformationen des Benutzers, die vom zweiten Empfangsmodul empfangen wurden, Folgendes umfassen: Medienzugriffssteuerungs(MAC)-Adressinformationen zu einem Zugangspunkt, mit dem der Benutzer verknüpft werden muss, Dienstsatzkennungs(SSID)-Informationen, mit denen der Benutzer verknüpft werden muss, und MAC-Adressinformationen einer Drahtlosnetzwerkkarte des Benutzers.

10. Zugangssteuerung nach Anspruch 8, die ferner Folgendes umfasst:
ein drittes Empfangsmodul, das dazu ausgelegt ist, eine zweite CAPWAP-Tunneleinrichtungsanforderung, die vom Zugangspunkt gesendet wurde, zu empfangen, wobei die zweite CAPWAP-Tunneleinrichtungsanforderung zum Anfordern der Einrichtung eines zweiten CAPWAP-Tunnels zwischen der Zugangssteuerung und dem Zugangspunkt verwendet wird; und
ein drittes Sendemodul, das dazu ausgelegt ist, eine zweite CAPWAP-Tunneleinrichtungsantwort an den Zugangspunkt zu senden;
wobei das zweite Empfangsmodul dazu ausgelegt ist, die Drahtloszugangsinformationen des Benutzers, die vom Zugangspunkt über den zweiten CAPWAP-Tunnel gesendet wurden, zu empfangen.

11. Zugangssteuerung nach einem der Ansprüche 8 bis 10, die ferner Folgendes umfasst:
ein viertes Empfangsmodul, das dazu ausgelegt ist, eine Verknüpfungsanforderung, die vom Benutzer gesendet wurde, zu empfangen, bevor die Zugangssteuerung die Drahtloszugangsinformationen des Benutzers über den ersten CAPWAP-Tunnel an das Mehrfachdienststeuergateway sendet, wobei die Verknüpfungsanforderung zum Anfordern der Verwendung eines drahtlosen Netzwerks verwendet wird; und
ein Verifizierungsmodul, das dazu ausgelegt ist, eine Verknüpfungszulassungsverifizierung am Benutzer durchzuführen;
wobei das zweite Sendemodul speziell dazu ausgelegt ist, unter einer Bedingung, dass die Verifizierung bestanden wird, die Drahtloszugangsinformationen des Benutzers über den ersten CAPWAP-Tunnel an das Mehrfachdienststeuergateway zu senden.

12. Mehrfachdienststeuergateway, das Folgendes umfasst:
ein erstes Empfangsmodul (601), das dazu ausgelegt ist, eine erste Tunneleinrichtungsanforderung für die Steuerung und Bereitstellung von drahtlosen Zugangspunkten, CAPWAP, die von einer Zugangssteuerung gesendet wurde, zu empfangen, wobei die erste CAPWAP-Tunneleinrichtungsanforderung zum Anfordern der Einrichtung eines ersten CAPWAP-Tunnels zwischen der Zugangssteuerung und dem Mehrfachdienststeuergateway verwendet wird, wobei die Zugangssteuerung zum Verwalten von Zugangspunkten verwendet wird;
ein erstes Sendemodul (602), das dazu ausgelegt ist, eine erste CAPWAP - Tunneleinrichtungsantwort an die Zugangssteuerung zu senden;
ein zweites Empfangsmodul (603), das dazu ausgelegt ist, Drahtloszugangsinformationen eines Benutzers, die über den ersten CAPWAP - Tunnel von der Zugangssteuerung gesendet wurden, zu empfangen;
ein drittes Empfangsmodul (604), das dazu ausgelegt ist, eine erste Zugangsauthentifizierungsanforderung, die vom Benutzer gesendet wurde, zu empfangen; und
ein zweites Sendemodul (605), das dazu ausgelegt ist, nachdem das dritte Empfangsmodul die erste Zugangsauthentifizierungsanforderung empfangen hat, eine zweite Zugangsauthentifizierungsanforderung, die Parameter enthält, die zum Authentifizieren des Benutzers erforderlich sind, gemäß den Drahtloszugangsinformationen des Benutzers an einen Authentifizierungs-, Autorisierungs-, Abrechnungs(AAA)-Authentifizierungsserver zu senden.

13. Mehrfachdienststeuergateway nach Anspruch 12, wobei die Drahtloszugangsinformationen des Benutzers Folgendes umfassen:
Medienzugriffssteuerungs(MAC)-Adressinformationen zu einem Zugangspunkt, mit dem der Benutzer verknüpft werden muss, Dienstsatzkennungs(SSID)-Informationen, mit denen der Benutzer verknüpft werden muss, und MAC-Adressinformationen einer Drahtlosnetzwerkkarte des Benutzers und
die Parameter, die zum Authentifizieren des Benutzers erforderlich sind, Folgendes umfassen: die MAC-Adressinformationen des Zugangspunktes, mit dem der Benutzer verknüpft werden muss, und die SSID-Informationen, mit denen der Benutzer verknüpft werden muss.

14. Mehrfachdienststeuergateway nach Anspruch 12, das ferner Folgendes umfasst:
ein Bestimmungsmodul, das dazu ausgelegt ist, die Drahtloszugangsinformationen des Benutzers, die im Mehrfachdienststeuergateway gespeichert sind, gemäß einer MAC-Adresse des Benutzers, die in der ersten Zugangsauthentifizierungsanforderung enthalten ist, zu bestimmen; und
ein Kapselungsmodul, das dazu ausgelegt ist, die MAC-Adressinformationen des Zugangspunktes, mit dem der Benutzer verknüpft werden muss, und die SSID-Informationen, mit denen der Benutzer verknüpft werden muss, die in den Drahtloszugangsinformationen des Benutzers umfasst sind, in die zweite Zugangsauthentifizierungsanforderung zu kapseln;
wobei das zweite Sendemodul ferner dazu ausgelegt ist, die zweite Zugangsauthentifizierungsanforderung, die vom Kapselungsmodul gekapselt wurde, an den AAA-Authentifizierungsserver zu senden.

15. Mehrfachdienststeuergateway nach Anspruch 14, das ferner Folgendes umfasst:
ein viertes Empfangsmodul, das dazu ausgelegt ist, eine Anforderung zum Löschen der Drahtloszugangsinformationen des Benutzers, die über den ersten CAPWAP-Tunnel von der Zugangssteuerung gesendet wurden, zu empfangen; und
ein Verarbeitungsmodul, das dazu ausgelegt ist, die Drahtloszugangsinformationen des Benutzers, die lokal gespeichert sind, zu löschen.

## Revendications

1. Procédé de transmission d'informations sans fil, comprenant les étapes consistant à :
envoyer (101), par un dispositif de contrôle d'accès, une première demande de contrôle et de mise en service de points d'accès sans fil, CAPWAP (control and provisioning of wireless access points), comportant l'établissement d'un tunnel vers une passerelle de contrôle de services multiples, dans lequel la première demande d'établissement de tunnel CAPWAP est utilisée pour demander l'établissement d'un premier tunnel CAPWAP entre le dispositif de contrôle d'accès et la passerelle de contrôle de services multiples, dans lequel le dispositif de contrôle d'accès est utilisé pour gérer les points d'accès ;
recevoir (102), par le dispositif de contrôle d'accès, une première réponse d'établissement de tunnel CAPWAP envoyée par la passerelle de contrôle de services multiples ;
recevoir (103), par le dispositif de contrôle d'accès, des informations d'accès sans fil d'un utilisateur envoyées par un point d'accès ;
recevoir, par le dispositif de contrôle d'accès, une demande d'association envoyée par l'utilisateur pour demander l'utilisation d'un réseau sans fil ;
effectuer, par le dispositif de contrôle d'accès, une vérification des autorisations d'association sur l'utilisateur ; et
envoyer (104), par le dispositif de contrôle d'accès, si la vérification est réussie, des informations d'accès sans fil de l'utilisateur à la passerelle de contrôle de services multiples à travers le premier tunnel CAPWAP.

2. Procédé selon la revendication 1, dans lequel les informations d'accès sans fil de l'utilisateur comprennent : des informations d'adresse de contrôle d'accès au support, MAC (media access control), d'un point d'accès auquel l'utilisateur doit être associé, des informations identifiant un ensemble de services, SSID (service set identifier), auxquelles l'utilisateur doit être associé et des informations d'adresse MAC d'une carte de réseau sans fil de l'utilisateur.

3. Procédé selon la revendication 1 ou 2, dans lequel, avant la réception, par le dispositif de contrôle d'accès, des informations d'accès sans fil d'un utilisateur envoyées par un point d'accès, le procédé comprend en outre les étapes consistant à :
recevoir, par le dispositif de contrôle d'accès, une demande d'établissement d'un second tunnel CAPWAP, envoyée par le point d'accès, dans lequel la seconde demande d'établissement de tunnel CAPWAP est utilisée pour demander l'établissement d'un second tunnel CAPWAP entre le dispositif de contrôle d'accès et le point d'accès ;
envoyer, par le dispositif de contrôle d'accès, une réponse concernant l'établissement d'un second tunnel CAPWAP vers le point d'accès ; et
recevoir, par le dispositif de contrôle d'accès, les informations d'accès sans fil de l'utilisateur envoyées par le point d'accès à travers le second tunnel CAPWAP.

4. Procédé selon l'une quelconque des revendications 1 à 3, dans lequel, avant l'envoi, par le dispositif de contrôle d'accès, des informations d'accès sans fil de l'utilisateur à la passerelle de contrôle de services multiples à travers le premier tunnel CAPWAP, le procédé comprend en outre les étapes consistant à :
recevoir, par le dispositif de contrôle d'accès, une demande d'association envoyée par l'utilisateur, dans lequel la demande d'association est utilisée pour demander l'utilisation d'un réseau sans fil ;
effectuer, par le dispositif de contrôle d'accès, une vérification des autorisations d'association sur l'utilisateur, et, si la vérification est réussie, déterminer, par le dispositif de contrôle d'accès, d'envoyer les informations d'accès sans fil de l'utilisateur à la passerelle de contrôle de services multiples par l'intermédiaire du premier tunnel CAPWAP.

5. Procédé de transmission d'informations sans fil, comprenant les étapes consistant à :
recevoir (201), par une passerelle de contrôle de services multiples, une première demande d'établissement de tunnel, CAPWAP, pour le contrôle et la mise en service de points d'accès sans fil, envoyée par un dispositif de contrôle d'accès, dans lequel la demande d'établissement d'un premier tunnel CAPWAP est utilisée pour demander l'établissement d'un premier tunnel CAPWAP entre le dispositif de contrôle d'accès et la passerelle de contrôle de services multiples, dans lequel le dispositif de contrôle d'accès est utilisé pour gérer les points d'accès ;
envoyer (202), par la passerelle de contrôle de services multiples, une réponse concernant l'établissement d'un premier tunnel CAPWAP vers le dispositif de contrôle d'accès ;
recevoir (203), par la passerelle de contrôle de services multiples, des informations d'accès sans fil d'un utilisateur envoyées par le dispositif de contrôle d'accès à travers le premier tunnel CAPWAP ;
recevoir (204), par la passerelle de contrôle de services multiples, une première demande d'authentification d'accès envoyée par l'utilisateur ; et après réception de la première demande d'authentification d'accès, envoyer (205), par la passerelle de contrôle de services multiples, une seconde demande d'authentification d'accès portant les paramètres nécessaires à l'authentification de l'utilisateur auprès d'un serveur d'authentification de comptabilisation d'autorisation à l'authentification, AAA (Authentication Authorization Accounting), conformément aux informations d'accès sans fil de l'utilisateur.

6. Procédé selon la revendication 5, dans lequel les informations d'accès sans fil de l'utilisateur comprennent : des informations d'adresse de contrôle d'accès au support, MAC, d'un point d'accès auquel l'utilisateur doit être associé, des informations identifiant un ensemble de services, SSID, auxquelles l'utilisateur doit être associé et des informations d'adresse MAC d'une carte de réseau sans fil de l'utilisateur ; et les paramètres nécessaires à l'authentification de l'utilisateur comprennent : des informations d'adresse MAC du point d'accès auquel l'utilisateur doit être associé et des informations SSID auxquelles l'utilisateur doit être associé.

7. Procédé selon la revendication 6, dans lequel, après réception de la première demande d'authentification d'accès, l'envoi, par la passerelle de contrôle de services multiples, d'une seconde demande d'authentification d'accès à un serveur d'authentification de comptabilisation d'autorisation à l'authentification, AAA, en fonction des informations d'accès sans fil de l'utilisateur, comprend les étapes consistant à :
déterminer, par la passerelle de contrôle de services multiples, les informations d'accès sans fil de l'utilisateur stockées dans la passerelle de contrôle de services multiples en fonction d'une adresse MAC de l'utilisateur acheminée dans la première demande d'authentification d'accès ; et
encapsuler, par la passerelle de contrôle de services multiples, les informations d'adresse MAC du point d'accès auquel l'utilisateur doit être associé et les informations SSID auxquelles l'utilisateur doit être associé, qui sont comprises dans les informations d'accès sans fil de l'utilisateur, dans la seconde demande d'authentification d'accès, et envoyer la seconde demande d'authentification d'accès au serveur d'authentification AAA.

8. Dispositif de contrôle d'accès, comprenant :
un premier module d'envoi (401), configuré pour envoyer par un dispositif de contrôle d'accès, une première demande de contrôle et de mise en service de points d'accès sans fil, CAPWAP, comportant l'établissement d'un tunnel vers une passerelle de contrôle de services multiples, dans lequel la première demande d'établissement de tunnel CAPWAP est utilisée pour demander l'établissement d'un premier tunnel CAPWAP entre le dispositif de contrôle d'accès et la passerelle de contrôle de services multiples, dans lequel le dispositif de contrôle d'accès est utilisé pour gérer les points d'accès ;
un premier module de réception (402), configuré pour recevoir une première réponse d'établissement de tunnel CAPWAP envoyée par la passerelle de contrôle de services multiples ;
un deuxième module de réception (403), configuré pour recevoir des informations d'accès sans fil d'un utilisateur envoyées par un point d'accès ;
un troisième module de réception, configuré pour recevoir une demande d'association envoyée par l'utilisateur pour demander l'utilisation d'un réseau sans fil ;
un module d'exécution, configuré pour effectuer une vérification d'autorisation d'association sur l'utilisateur ; et
un deuxième module d'envoi (404), configuré pour envoyer les informations d'accès sans fil de l'utilisateur à la passerelle de contrôle de services multiples par l'intermédiaire du premier tunnel CAPWAP si la vérification est réussie.

9. Dispositif de contrôle d'accès selon la revendication 8, dans lequel les informations d'accès sans fil de l'utilisateur reçues par le deuxième module de réception comprennent : des informations d'adresse de contrôle d'accès au support, MAC, d'un point d'accès auquel l'utilisateur doit être associé, des informations identifiant un ensemble de services, SSID, auxquelles l'utilisateur doit être associé et des informations d'adresse MAC d'une carte de réseau sans fil de l'utilisateur.

10. Dispositif de contrôle d'accès selon la revendication 8, comprenant en outre :
un troisième module de réception, configuré pour recevoir une seconde demande d'établissement d'un tunnel CAPWAP, envoyée par le point d'accès, dans lequel la seconde demande d'établissement de tunnel CAPWAP est utilisée pour demander l'établissement d'un second tunnel CAPWAP entre le dispositif de contrôle d'accès et le point d'accès ; et
un troisième module d'envoi, configuré pour envoyer une seconde réponse d'établissement de tunnel CAPWAP au point d'accès ;
dans lequel le deuxième module de réception est configuré pour recevoir les informations d'accès sans fil de l'utilisateur envoyées par le point d'accès à travers le second tunnel CAPWAP.

11. Dispositif de contrôle d'accès selon l'une quelconque des revendications 8 à 10, comprenant en outre :
un quatrième module de réception, configuré pour recevoir une demande d'association envoyée par l'utilisateur avant que le contrôleur d'accès n'envoie les informations d'accès sans fil de l'utilisateur à la passerelle de contrôle de services multiples à travers le premier tunnel CAPWAP, dans lequel la demande d'association est utilisée pour demander l'utilisation d'un réseau sans fil ; et
un module de vérification, configuré pour effectuer une vérification des autorisations d'association sur l'utilisateur ;
dans lequel le deuxième module d'envoi est spécifiquement configuré pour envoyer les informations d'accès sans fil de l'utilisateur à la passerelle de contrôle de services multiples par l'intermédiaire du premier tunnel CAPWAP à condition que la vérification soit réussie.

12. Passerelle de contrôle de services multiples, comprenant :
un premier module de réception (601), configuré pour recevoir une première demande de contrôle et de mise en service de points d'accès sans fil, CAPWAP, comportant l'établissement d'un tunnel envoyée par un dispositif de contrôle d'accès, dans laquelle la demande d'établissement d'un premier tunnel CAPWAP est utilisée pour demander l'établissement d'un premier tunnel CAPWAP entre le dispositif de contrôle d'accès et la passerelle de contrôle de services multiples, dans laquelle le dispositif de contrôle d'accès est utilisé pour gérer les points d'accès ;
un premier module d'envoi (602), configuré pour envoyer une première réponse d'établissement de tunnel CAPWAP au dispositif de contrôle d'accès ;
un deuxième module de réception (603), configuré pour recevoir des informations d'accès sans fil d'un utilisateur envoyées par le dispositif de contrôle d'accès à travers le premier tunnel CAPWAP ;
un troisième module de réception (604), configuré pour recevoir une première demande d'authentification d'accès envoyée par l'utilisateur ; et
un deuxième module d'envoi (605), configuré pour envoyer, après que le troisième module de réception a reçu la première demande d'authentification d'accès, une seconde demande d'authentification d'accès portant les paramètres nécessaires pour authentifier l'utilisateur auprès d'un serveur d'authentification de comptabilisation d'autorisation à l'authentification, AAA, conformément aux informations d'accès sans fil de l'utilisateur.

13. Passerelle de contrôle de services multiples selon la revendication 12, dans laquelle les informations d'accès sans fil de l'utilisateur comprennent : des informations d'adresse de contrôle d'accès au support, MAC, d'un point d'accès auquel l'utilisateur doit être associé, des informations identifiant un ensemble de services, SSID, auxquelles l'utilisateur doit être associé et des informations d'adresse MAC d'une carte de réseau sans fil de l'utilisateur ; et
les paramètres nécessaires à l'authentification de l'utilisateur comprennent : des informations d'adresse MAC du point d'accès auquel l'utilisateur doit être associé et des informations SSID auxquelles l'utilisateur doit être associé.

14. Passerelle de contrôle de services multiples selon la revendication 12, comprenant en outre :
un module de détermination, configuré pour déterminer les informations d'accès sans fil de l'utilisateur stockées dans la passerelle de contrôle de services multiples conformément à une adresse MAC de l'utilisateur acheminée dans la première demande d'authentification d'accès ; et
un module d'encapsulation, configuré pour encapsuler les informations d'adresse MAC du point d'accès auquel l'utilisateur doit être associé et les informations SSID auxquelles l'utilisateur doit être associé, qui figurent dans les informations d'accès sans fil de l'utilisateur, dans la seconde demande d'authentification d'accès ;
dans laquelle le deuxième module d'envoi est en outre configuré pour envoyer la seconde demande d'authentification d'accès encapsulée par le module d'encapsulation au serveur d'authentification AAA.

15. Passerelle de contrôle de services multiples selon la revendication 14, comprenant en outre :
un quatrième module de réception, configuré pour recevoir une demande de suppression des informations d'accès sans fil de l'utilisateur envoyées par le dispositif de contrôle d'accès à travers le premier tunnel CAPWAP ; et
un module de traitement, configuré pour supprimer les informations d'accès sans fil de l'utilisateur stockées localement.
